Europäisches Patentamt

European Patent Office

Office européen des brevets

(19)

(11) Veröffentlichungsnummer: **0 212 189**
**B1**

(12) EUROPÄISCHE PATENTSCHRIFT

(45) Veröffentlichungstag der Patentschrift: **05.09.90**

(21) Anmeldenummer: **86109213.8**

(22) Anmeldetag: **05.07.86**

(51) Int. Cl.⁵: **B 23 Q 11/08,** F 16 P 1/02

(54) Gliederbandabdeckung.

(30) Priorität: **27.08.85 DE 8524436 u**
**03.12.85 DE 3542692**

(43) Veröffentlichungstag der Anmeldung:
**04.03.87 Patentblatt 87/10**

(45) Bekanntmachung des Hinweises auf die
Patenterteilung:
**05.09.90 Patentblatt 90/36**

(84) Benannte Vertragsstaaten:
**AT CH DE FR GB IT LI NL SE**

(56) Entgegenhaltungen:
**EP-A-0 041 164**
**CA-A-1 020 079**
**CH-A-515 835**
**DE-A-3 047 711**
**DE-U-8 104 252**
**GB-A-2 130 162**

(73) Patentinhaber: **Kabelschlepp Gesellschaft mit
beschränkter Haftung
Marienborner Strasse 75
D-5900 Siegen 1 (DE)**

(72) Erfinder: **Moritz, Werner
Wetzlarer Strasse 112
D-5900 Siegen (DE)**

(74) Vertreter: **Patentanwälte Dipl.-Ing. Alex Stenger
Dipl.-Ing. Wolfram Watzke Dipl.-Ing. Heinz J.
Ring
Kaiser-Friedrich-Ring 70
D-4000 Düsseldorf 11 (DE)**

Courier Press, Leamington Spa, England.

**Beschreibung**

Gegenstand der Erfindung ist eine Gliederbandabdeckung für Führungsbahnen, Abtriebsaggregate und unfallträchtige Konstruktionsteile an Werkzeugmaschinen mit einzelnen, in einer Ebene gereihten, starren Platten, welche an ihren benachbarten Längsseiten gelenkig miteinander verbunden sind, wobei die Platten an ihren Längsseiten mit offenen und am Boden hinterschnittenen Nuten versehen und in jeder Nut Gelenkelemente verankert sind, wobei in jeder Nut im Abstand voneinander Scharnieraugen verankert sind, wobei die Scharnieraugen benachbarter Platten fluchtend ineinandergreifen und auf einer die Platten verbindenden Gelenkachse angeordnet sind.

Aus der DE—B 30 20 621 ist eine Gliederbandabdeckung bekannt, deren Platten mittels biegsamer Elemente aus Kunststoff formschlüssig miteinander verbunden sind. Bei dieser bekannten Gliederbandabdeckung ist es schwierig, die Verbindungselemente auszutauschen, wenn sie eingerissen oder gebrochen sind, weil ihre Längsränder bei der Montage in Ausnehmungen der Platten eingeklemmt worden sind. Außerdem liegen die Verbindungselemente aus Kunststoff zwischen den Platten teilweise frei und können durch heiße Späne beschädigt werden.

Aus der DE—A 20 20 108 ist eine Gliederbahn bekannt, die aus einer Anzahl gelenkig miteinander verbundener, gleichartiger Glieder besteht, welche auf der einen, dem benachbarten Glied zugewandten Seite einen Kupplungsvorsprung mit rotationssymmetrischem Außenprofil und auf der entgegengesetzten Seite eine komplementär ausgebildete Kupplungsaufnahme aufweisen. Die Kupplungsvorsprünge können in die komplementär ausgebildeten Kupplungsaufnahmen hineingeschoben werden, so daß sich eine scharnierartige Verbindung mit begrenztem Schwenkwinkel zwischen den einzelnen Gliedern ergibt. Die Formgestaltung der einzelnen Glieder dieser bekannten Gliederbahn, insbesondere der Kupplungsteile ist so kompliziert, daß sie wahrscheinlich nur aus einem Kunststoff hergestellt werden können. Gliederbahnen aus Kunststoff scheiden aber für viele Anwendungsfälle an Werkzeugmaschinen aus, weil sie von heißen oder glühenden Spänen zerstört werden können.

Aus dem DE—GM 81 04 252 ist eine Abdeckschürze bekannt, die aus einer Anzahl von plattenförmigen Gliedern besteht, welche im Bereich ihrer Längskanten gelenkig miteinander verbunden sind, wobei die Verbindung aus handelsüblichen Scharnierbändern besteht, die miteinander verschweißt werden sollen. Auf den Scharnierbändern sind Deckplatten und Abstreifleisten zum Schutz der Scharnierbänder befestigt.

Die Druckschrift CA—A—1 020 079 beschreibt eine Gliederbandabdeckung mit einzelnen, in einer Ebene gereihten, starren Platten, welche an ihren benachbarten Längsseiten gelenkig miteinander verbunden sind, wobei die Platten an ihren Längsseiten mit offenen und am Boden hinter

schnittenen Nuten versehen und in jeder Nut Gelenkelemente verankert sind, wobei in jeder Nut im Abstand voneinander Scharnieraugen verankert sind. Die Scharnieraugen benachbarter Platten greifen fluchtend ineinander und die Scharnieraugen sind auf einer der Platten verbindenden Gelenkachse angeordnet. Aber die Profilform dieser bekannten Scharnieraugen bedingt, daß die gelenkig verbundenen Platten nur einseitig drehen können und außerdem ist die Gestalt der bekannten Scharnieraugen sehr kompliziert.

Davon ausgehend liegt der Erfindung die Aufgabe zugrunde, eine einfach konstruierte und montierbare Gliederbandabdeckung zu schaffen, die wartungsarme und langlebige Gelenke ohne Klemmstellen für Späne hat.

Als technische Lösung wird dafür eine Gliederbandabdeckung der eingangs beschriebenen Art vorgeschlagen, bei der die Scharnieraugen mit beiderseits eines Längsschlitzes angeordneten, parallel zueinander verlaufenden Schenkeln versehen sind, deren Schenkelenden nach außen abgewinkelt sind und sich in den hinterschnittenen Nuten der Platten verankern können.

Bei einer praktischen Ausführungsform können die Platten an jeder Längsseite mit einer dem Radius der Scharnieraugen angepaßten Hohlkehle versehen sein, in welcher die Nut mündet.

Die Gelenkachse wird bei einer praktischen Ausführungsform zweckmäßig rohrförmig ausgebildet, so daß in ihren offenen Enden Spreizhülsen mit einem die Platten überlappenden Kopf eingesetzt werden können. Die Spreizhülsen verhindern dann das Wandern der Gelenkachsen in ihrer Längsrichtung.

Hinsichtlich der Materialpaarung bieten sich verschiedene Möglichkeiten an, je nachdem, ob die Gliederbandabdeckung lediglich als Unfallschutz Verwendung finden oder auch das Eindringen heißer Späne und/oder von Kühlmittel in eine Werkzeugmaschine verhindern soll. Bei einem reinen Unfallschutz können sämtliche Konstruktionsteile, nämlich die Platten, die Scharnieraugen, die Gelenkachsen und die Spreizhülsen aus Kunststoff bestehen. Wenn aber bei einem praktischen Anwendungsfall auch heiße Späne und/ oder aggressive Kühlmittel von Konstruktionsteilen der Werkzeugmaschine ferngehalten werden sollen, bestehen die Platten zweckmäßig aus Metall, beispielsweise Aluminium oder Stahl, und die Scharnieraugen aus Federstahl, damit eine lange Lebensdauer gewährleistet ist.

Es können auch unterschiedliche Materialien für die Platten verwendet werden. Wenn die Platten beispielsweise in ihrem Grundkörper aus Aluminium, einer Aluminium-Legierung oder Stahl bestehen, so können sie an ihren Unterseiten zu den Längsseiten parallele Kunststoffleisten aufweisen, die der Schonung der Bettbahn dienen. Vorteilhafterweise sind die Kunststoffleisten mittels Schwalbenschwanzführungen in die Unterseiten der Platten eingeschoben. Statt dessen können die Platten auch an ihren Unterseiten aus Kunststoff und an ihren Oberseiten aus Aluminium, einer Aluminium-Legierung oder Stahl bestehen. Die Unterseite aus Kunststoff dient wiederum zur Schonung der Bettbahn, während die Oberseite aus Metall einen Schutz gegen heiße Späne liefert. Dabei bestehen die Platten vorteilhafterweise jeweils aus zwei Verbundprofilen für die unterschiedlichen Materialien für die Unter- und Oberseiten, wobei die Verbundprofile mittels Schwalbenschwanzführungen miteinander verbunden sind.

In einer weiteren praktischen Ausführungsform sind seitlich auf die Stirnseiten der Platten Verschlußstücke aufgesteckt, die die Enden der Gelenkachsen überragen und zu den Nuten der Platten korrespondierende Steckzapfen aufweisen. Dabei werden die Steckzapfen in die Nuten der Platten eingedrückt. Die Verschlußstücke verhindern eine unbeabsichtigtes und ungewolltes seitliches Verschieben der einzelnen Platten. Darüber hinaus dienen sie als Abschluß der Stirnseiten der Platten. Vorzugsweise entspricht die Höhe der Verschlußstücke der Dicke der Platten und das eine Ende der Verschlußstücke weist eine kreisförmige Ausbuchtung und das andere Ende eine dazu entsprechende kreisförmige Abrundung auf, wobei die Ausbuchtungen und die Abrundungen benachbarter Verschlußstücke verschwenkbar aneinander vorbeigleiten. Die Verschlußstücke können dabei aus Kunststoff bestehen.

Eine nach dieser technischen Lehre ausgebildete Gliederbandabdeckung hat nicht nur den Vorteil einer einfachen Konstruktion, sondern sie kann auch auf einfache Weise automatisch montiert werden. Die Reparatur bereitet keine größeren Schwierigkeiten, weil alle Einzelteile ausgewechselt werden können. In der Ausführungsform bei der alle Konstruktionsteile aus Metall bestehen, hat die Gliederbandabdeckung eine große Lebensdauer, weil an den Gelenken ideale Gleitpaarungen beispielsweise Federstahl gegen Aluminium oder Federstahl gegen Kunststoff gewählt werden können.

Weitere Einzelheiten und Vorteile ergeben sich aus der nachfolgenden Beschreibung der zugehörigen Zeichnung, in der ein Abschnitt einer erfindungsgemäß ausgebildeten Gliederbandabdeckung dargestellt worden ist. In der Zeichnung zeigen:

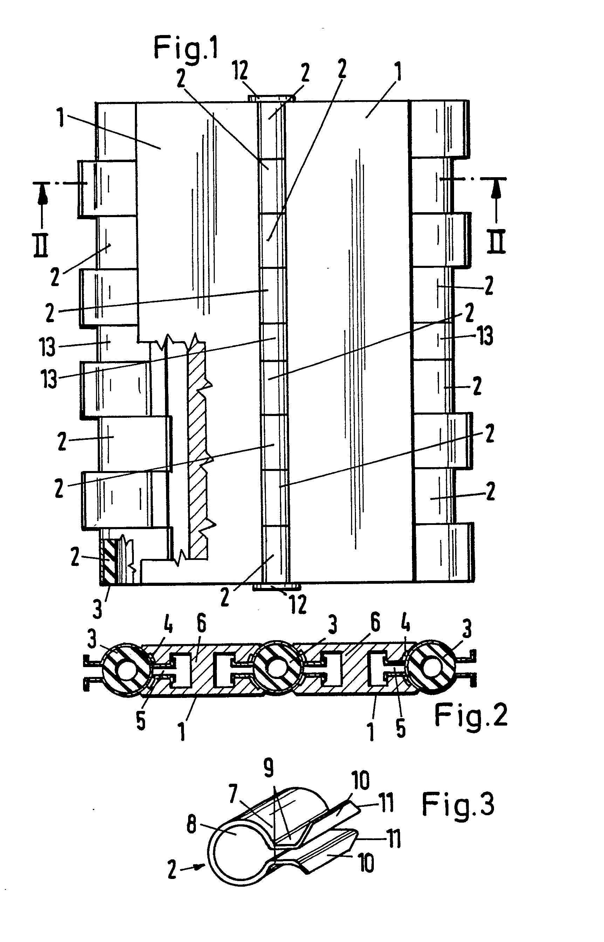

Fig. 1 zwei miteinander verbundene und an ihren freien Längsseiten mit Scharnieraugen bestückte Platten in Draufsicht;

Fig. 2 dieselben Platten entlang der Linie II—II in Fig. 1 geschnitten;

Fig. 3 ein Scharnierauge in perspektivischer Darstellung;

Fig. 4 eine perspektivische Darstellung von unten einer Platte mit einer eingeschobenen Kunststoffleiste;

Fig. 5 eine perspektivische Darstellung ebenfalls von unten, wobei die Platte aus zwei Verbundprofilen aus unterschiedlichen Materialien besteht;

Fig. 6 ein Verschlußstück in perspektivischer Darstellung;

Fig. 7 eine Seitenansicht auf zwei miteinander verbundene Platten, wobei auf die Stirnseiten Verschlußstücke aufgesetzt sind.

Die Gliederbandabdeckung besteht aus mehreren, gelenkig miteinander verbundenen Platten 1, Scharnieraugen 2 und in diese eingesetzten Gelenkachsen 3.

Jede Platte 1 ist an ihren Längsseiten mit einer Hohlkehle 4 versehen, in der eine Nut 5 mündet, die am Boden hinterschnitten ist. Zwischen den Nuten 5 jeder Platte 1 befindet sich ein Steg 6, der für eine ausreichende Stabilität sorgt. Die Platten 1 haben ein flaches, doppel-T-förmiges Profil.

Jedes Scharnierauge 2 besteht aus einem im Querschnitt kreisrunden Gelenkabschnitt 7 mit einem Längsschlitz 8, an den sich parallel zueinander verlaufende Schenkel 9 anschließen, deren Schenkelenden 10 nach außen abgewinkelt sind. An ihren Stirnseiten sind die Schenkelenden 10 mit Schrägflächen 11 versehen. Der Außendurchmesser des Gelenkabschnittes 7 der Scharnieraugen 2 ist etwa so groß wie die Dicke einer Platte 1.

Die Gelenkachsen 3 haben die gleiche Länge wie die Platten 1 und sind rohrförmig ausgebildet, so daß in die offenen Enden Spreizhülsen eingesetzt werden können, welche die Stirnseiten der Platten 1 mit ihrem Kopf geringfügig überlappen. Mit den Speizhülsen 12 wird das Wandern der Gelenkachsen 3 in Längsrichtung verhindert.

Die Montage einer Gliederbandabdeckung ist sehr einfach. Zunächst werden die Scharnieraugen 2 mit abwechselnd in entgegengesetzt Richtung zeigend angeordneten Schenkeln 9 auf die Gelenkachsen 3 aufgereiht. Danach können die Scharnieraugen 2 mit ihren Schenkeln 9 in die Nuten 5 benachbarter Platten 1 von der Stirnseit her eingeführt werden. Die Schrägflächen 11 an den Schenkelenden 10 der Scharnieraugen 2 erleichtern das Einführen in die Nuten 5. Dabei verankern sich die Scharnieraugen 2 mit ihren abgewinkelten Schenkelenden 10 in den Nuten 5 und werden die Gelenkachsen umfassend etwas vorgespannt. Wenn die Länge der Platten nicht genau einem Vielfachen der Breite der Scharnieraugen 2 entsprechen sollte, können in der Mitte Paßstücke 13 eingesetzt werden.

Im dem dargestellten Ausführungsbeispiel bestehen die Platten 1 aus Aluminium, die Scharnieraugen 2 aus Federstahl und die Gelenkachsen 3 aus Kunststoff. Diese Materialpaarung ergibt eine leichte, gut bewegliche und korrosionsbeständige Gliederbandabdeckung mit großer Lebensdauer.

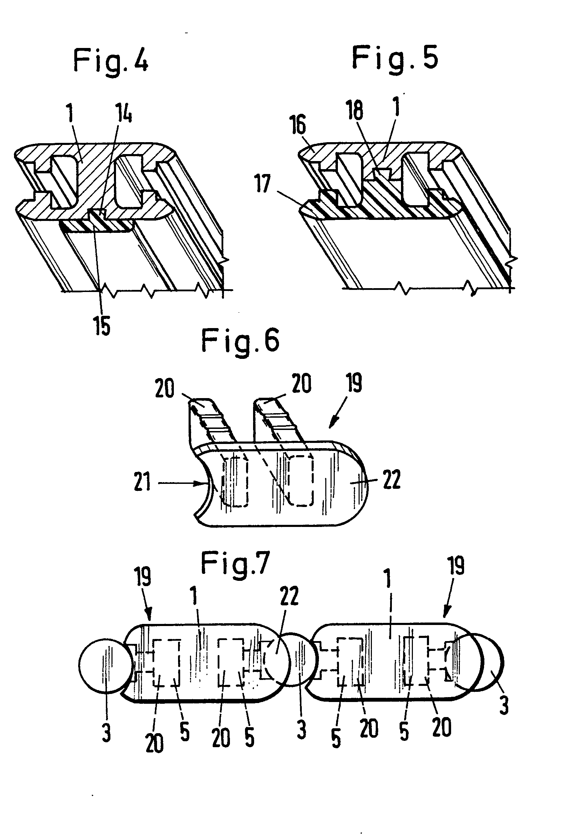

In den Fig. 4 und 5 sind weitere Ausführungsbeispiele von Platten 1 dargestellt. Bei dem Ausführungsbeispiel in Fig. 4 besteht der Grundkörper der Platte 1 aus Metall, beispielsweise aus Aluminium, einer Aluminium-Legierung oder Stahl. In die Unterseite der Platte 1 ist mittels einer Schwalbenschwanzführung 14 eine Kunststoffleiste 14 eingeschoben, die parallel zu den Längsseiten der Platte 1 ausgerichtet ist. Diese Kunststoffleiste 15 dient zur Schonung der Bettbahn.

Beim Ausführungsbeispiel in Fig. 5 besteht die Platte 1 aus zwei Verbundprofilen 16, 17, die ebenfalls über eine Schwalbenschwanzführung 18 miteinander verbunden sind. Das obere Verbundprofil 16 an der Oberseite der Platte 1 besteht aus

Aluminium, einer Aluminium-Legierung oder Stahl und dient als Schutz gegen heiße Späne. Das untere Verbundprofil 17 an der Unterseite der Platte 1 besteht aus Kunststoff oder einem ähnlichen Material und dient zur Schonung der Bettbahn.

In Fig. 6 ist ein Verschlußstück 19 dargestellt, das aus Kunststoff bestehen kann. Dieses Verschlußstück 19 weist zwei Steckzapfen 20 auf, die in die entsprechenden Nuten 5 einer Platte 1 hineingesteckt werden können, so daß das Verschlußstück 19 einen Abschluß der Stirnseiten der Platten 1 ermöglicht. Das Verschlußstück 19 weist am einen Ende (in der Zeichnung links) eine Ausbuchtung 21 und am anderen Ende (in der Zeichnung rechts) eine Abrundung 22 auf.

In Fig. 7 sind zwei Verschlußstücke 19 dargestellt, wie sie in die Stirnseiten zweier gestrichelt dargestellter Platten 1 eingedrückt sind. Zwischen den Platten 1 ist jeweils eine Gelenkachse 3 zu erkennen. Die Abrundungen 22 der Verschlußstücke 19 überragen dabei die Enden der Gelenkachsen 3, so daß ein ungewolltes und unbeabsichtigtes seitliches Verschieben der einzelnen Platten 1 verhindert wird. Darüber hinaus sind die Verschlußstücke 19 ein sauberer Abschluß der Stirnseiten der Platten 1, da diese durch die Nuten 5 offen sind.

Bezugszeichenliste

   1  Platte
   2  Scharnierauge
   3  Gelenkachse
   4  Hohlkehle
   5  Nut
   6  Steg
   7  Gelenkabschnitt
   8  Längsschlitz
   9  Schenkel
  10  Schenkelende
  11  Schrägfläche
  12  Spreizhülse
  13  Paßstück
  14  Schwalbenschwanzführung
  15  Kunststoffleiste
  16  Verbundprofil
  17  Verbundprofil
  18  Schwalbenschwanzführung
  19  Verschlußstück
  20  Steckzapfen
  21  Ausbuchtung
  22  Abrundbung

**Patentansprüche**

1. Gliederbandabdeckung für Führungsbahnen, Antriebsaggregate und unfallträchtige Konstruktionsteile an Werkzeugmaschinen mit einzelnen, in einer Ebene gereihten, starren Platten (1), welche an ihren benachbarten Längsseiten gelenkig miteinander verbunden sind, wobei die Platten (1) an ihren Längsseiten mit offenen und am Boden hinterschnittenen Nuten (5) versehen und in jeder Nut (5) im Abstand voneinander Gelenkelement in Form von Scharnieraugen (2) verankert sind, wobei die Scharnieraugen (2) benachbarter Platten (1) fluchtend ineinandergreifen und auf einer die Platten (1) verbindenden Gelenkachse (3) angeordnet sind, dadurch gekennzeichnet, daß die Scharnieraugen (2) mit beiderseits eines Längsschlitzes (8) angeordneten, parallel zueinander verlaufenden Schenkeln (9) versehen sind, deren Schenkelenden (10) nach außen abgewinkelt sind und sich in den hinterschnittenen Nuten der Platten verankern können.

2. Gliederbandabdeckung nach Anspruch 1, dadurch gekennzeichnet, daß die Platten (1) an jeder Längsseite mit einer dem Radius der Scharnieraugen (2) angepaßten Hohlkehle (4) versehen sind, in der die Nut (5) mündet.

3. Gliederbandabdeckung nach den Ansprüchen 1 und 2, dadurch gekennzeichnet, daß die Schenkelenden (10) an ihren Stirnseiten Schrägflächen (11) haben.

4. Gliederbandabdeckung nach den Ansprüchen 1 bis 3, dadurch gekennzeichnet, daß die Gelenkachse (3) rohrförmig ausgebildet ist.

5. Gliederbandabdeckung nach Anspruch 4, dadurch gekennzeichnet, daß in die offenen Enden der Gelenkachsen (3) Spreizhülsen (12) mit einem die Platten (1) überragenden Kopf eingesetzt sind.

6. Gliederbandabdeckung nach den Ansprüchen 1 bis 5, dadurch gekennzeichnet, daß der Durchmesser der Scharnieraugen (2) etwa der Dicke der Platten (1) entspricht.

7. Gliederbandabdeckung nach den Ansprüchen 1 bis 6, dadurch gekennzeichnet, daß die Scharnieraugen (2) unter Vorspannung in die Nuten (5) der Platten (1) eingesetzt sind.

8. Gliederbandabdeckung nach den Ansprüchen 1 bis 7, dadurch gekennzeichnet, daß die Platten (1) aus Kunststoff, Aluminium oder Stahl bestehen.

9. Gliederbandabdeckung nach den Ansprüchen 1 bis 8, dadurch gekennzeichnet, daß die Platten (1) an ihren Unterseiten zu den Längsseiten parallele Kunststoffleisten (15) aufweisen.

10. Gliederbandabdeckung nach Anspruch 9, dadurch gekennzeichnnet, daß die Kunststoffleisten (15) mittels Schwalbenschwanzführungen (14) in die Unterseite der Platten (1) eingeschoben sind.

11. Gliederbandabdeckung nach einem der Ansprüche 1 bis 8, dadurch gekennzeichnet, daß die Platten (1) an ihren Unterseiten aus Kunststoff und an ihren Oberseiten aus Aluminium, einer Aluminium-Legierung oder Stahl bestehen.

12. Gliederbandabdeckung nach Anspruch 11, dadurch gekennzeichnet, daß die Platten (1) jeweils aus zwei Verbundprofilen (16, 17) für die unterschiedlichen Materialien für die Unter- und Oberseiten bestehen, die mittels Schwalbenschwanzführungen (18) miteinander verbunden sind.

13. Gliederbandabdeckung nach den Ansprüchen 1 bis 12, dadurch gekennzeichnet, daß die Scharnieraugen (2) aus Kunststoff oder Federstahl bestehen.

14. Gliederbandabdeckung nach den Ansprüchen 1 bis 13, dadurch gekennzeichnet, daß die Gelenkachsen (3) aus Kunststoff, Aluminium oder Stahl bestehen.

15. Gliederbandabdeckung nach den Ansprüchen 1 bis 14, dadurch gekennzeichnet, daß seitlich auf die Stirnseiten der Platten (1) Verschlußstücke (19) aufgesteckt sind, die die Enden der Gelenkachsen (3) überragen und zu den Nuten (5) der Platten (1) korrespondierende Steckzapfen (20) aufweisen.

16. Gliederbandabdeckung nach Anspruch 15, dadurch gekennzeichnet, daß die Höhe der Verschlußstücke (19) der Dicke der Platten (1) entspricht und daß das eine Ende der Verschlußstücke (19) eine kreisförmige Ausbuchtung (21) und das andere Ende eine dazu entsprechend kreisförmige Abrundung (22) aufweist, wobei die Ausbuchtungen (21) und die Abrundungen (22) benachbarter Verschlußstücke verschwenkbar aneinander vorbeigleiten.

## Revendications

1. Bande de recouvrement à maillons pour glissières, groupes de commande et éléments de construction pouvant provoquer des accidents sur les machines outils comportant des plaques individuelles rigides (1) se succédant dans un plan et liées entre elles à articulation sur leurs côtés longitudinaux voisins, les plaques (1) étant munies sur leurs côtés longitudinaux de rainures ouvertes (5) élargies au fond, des éléments d'articulation qui se présentent sous forme d'oreilles de charnière (2) étant ancrés à distance l'un de l'autre dans chaque rainure (5), les oreilles de charnière (2) de plaques (1) voisines s'engageant entre elles en alignement et étant disposées sur un axe d'articulation (3) reliant les plaques (1), caractérisée en ce que les oreilles de charnière (2) sont munies de branches (9) s'étendant parallèlement entre elles et disposées d'un côté et de l'autre d'une fente longitudinale (8), les extrémités (10) de ces branches étant recourbées vers l'extérieur et s'ancrant dans les rainures élargies des plaques.

2. Bande de recouvrement à maillons selon la revendication 1, caractérisée en ce que les plaques (1) sont munies sur chaque côté longitudinal d'une cannelure (4) adaptée au rayon des oreilles de charnière (2), la rainure (5) débouchant dans cette cannelure.

3. Bande de recouvrement à maillons selon les revendications 1 et 2, caractérisée en ce que les extrémités (10) des branches présentent des surfaces inclinées (11) sur leurs côtés frontaux.

4. Bande de recouvrement à maillons selon les revendications 1 à 3, caractérisée en ce que l'axe d'articulation (3) est réalisé en forme de tube.

5. Bande de recouvrement à maillons selon la revendication 4, caractérisée en ce que des douilles d'expansion (12) ayant une tête en saillie sur les plaques (1) sont introduites dans les extrémités ouvertes des axes d'articulation (3).

6. Bande de recouvrement à maillons selon les revendications 1 à 5, caractérisée en ce que le diamètre des oreilles de charnière (2) correspond sensiblement à l'épaisseur des plaques (1).

7. Bande de recouvrement à maillons selon les revendications 1 à 6, caractérisée en ce que les oreilles de charnière (2) sont introduites sous précontrainte dans les rainures (5) des plaques (1).

8. Bande de recouvrement à maillons selon les revendications 1 à 7, caractérisée en ce que les plaques (1) sont constituées en matière plastique, en aluminium ou en acier.

9. Bande de recouvrement à maillons selon les revendications 1 à 8, caractérisée en ce que les plaques (1) comportant sur leur face inférieure des baguettes en matière plastique (15) parallèles aux côtés longitudinaux.

10. Bande de recouvrement selon la revendication 9, caractérisée en ce que les baguettes en matière plastique (15) sont engagées dans la face inférieure des plaques (1) au moyen de guidages à queue d'aronde (14).

11. Bande de recouvrement selon l'une des revendications 1 à 8, caractérisée en ce que les plaques (1) sont constituées en matière plastique du côté inférieur et en aluminium, en un alliage d'aluminium ou en acier du côté supérieur.

12. Bande de recouvrement selon la revendication 11, caractérisée en ce que chacune des plaques (1) est constituée de deux profilés combinés (16, 17) pour les matériaux différents du côté inférieur et du côté supérieur, ces profilés étant assemblés entre eux au moyen de guidages à queue d'aronde (18).

13. Bande de recouvrement à maillons selon les revendications 1 à 12, caractérisée en ce que les oreilles de charnière (2) sont constituées en matière plastique ou en acier à ressorts.

14. Bande de recouvrement à maillons selon les revendications 1 à 13, caractérisée en ce que les axes d'articulation (3) sont constitués en matière plastique, en aluminium ou en acier.

15. Bande de recouvrement à maillons selon les revendications 1 à 14, caractérisée en ce que des pièces de fermeture (19) sont engagées latéralement sur les faces frontales des plaques (1), ces pièces dépassent les extrémités des axes d'articulation (3) et comportant des tétons d'engagement correspondant aux rainures (5) des plaques (1).

16. Bande de recouvrement à maillons selon la revendication 15, caractérisée en ce que la hauteur des pièces de fermeture (19) correspond à l'épaisseur des plaques (1) et en ce que l'une des extrémités des pièces de fermeture (19) présente un évidement circulaire (21), tandis que l'autre extrémité présente un arrondi circulaire correspondant (22), les évidements (21) et les arrondis (22) de pièces de fermetures voisines glissant l'un sur l'autre à articulation.

## Claims

1. A jointed-belt cover for guideways, drive units and accident-prone structural parts of machine tools, comprising individual rigid plates (1) arranged in line in co-planar relationship and pivotally interconnected at their adjacent longitudinal sides, the plate (1) having at their longitudinal sides open grooves (5) undercut at the end and articulation elements in the form of hinge bosses (2) being anchored in each groove (5) in spaced relationship, the hinge bosses (2) of adjacent plates (1) engaging one inside the other in alignment and being disposed on an articulation spindle (3) connecting the plates (1), characterised in that the hinge bosses (2) are provided with parallel arms (9) disposed on either side of a slot (8), the arm ends (10) being bent outwards and being capable of anchoring in the undercut grooves of the plates.

2. A jointed-belt cover according to claim 1, characterised in that the plates (1) have a channel (4) on each longitudinal side, the channel being adapted to the radius of the hinge bosses (2) and having the groove (5) leading into said channel.

3. A joined-belt cover according to claims 1 and 2, characterised in that the arm ends (10) have inclined surfaces (11) at their end faces.

4. A jointed-belt cover according to claims 1 to 3, characterised in that the articulation spindle (3) is of tubular construction.

5. A jointed-belt cover according to claim 4, characterised in that expansion sleeves (12) having a head projecting over the plates (1) are inserted into the open ends of the articulation spindles (3).

6. A jointed-belt cover according to claims 1 to 5, characterised in that the diameter of the hinge bosses (2) corresponds approximately to the thickness of the plates (1).

7. A jointed-belt cover according to claims 1 to 6, characterised in that the hinge bossses (2) are inserted into the grooves (5) of the plates (1) with prestressing.

8. A jointed-belt cover according to claims 1 to 7, characterised in that the plates (1) consist of plastics, aluminium or steel.

9. A jointed-belt cover according to claims 1 to 8, characterised in that the plates (1) have at their undersides plastic strips (15) parallel to the longitudinal sides.

10. A jointed-belt cover according to claim 9, characterised in that the plastic strips (15) are inserted into the underside of the plates (1) by means of dovetail guides (14).

11. A jointed-belt cover according to any one of claims 1 to 8, characterised in that the plates (1) consist of plastics on the underside and of aluminium, an aluminium alloy or steel at the top.

12. A jointed-belt cover according to claim 11, characterised in that the plates (1) each consist of two combination profiles (16, 17) for the different materials for the top and bottom, said profiles being interconnected by dovetail guides (18).

13. A jointed-belt cover according to claims 1 to 12, characterised in that the hinge bosses (2) consist of plastics or spring steel.

14. A jointed-belt cover according to claims 1 to 13, characterised in that the articulation spindles (3) consist of plastics, aluminium or steel.

15. A jointed-belt cover according to claims 1 to 14, characterised in that plugs (19) are pushed laterally on to the end faces of the plates (1) and project over the ends of the articulation spindles (3) and have push-in lugs (20) corresponding to the grooves (5) in the plates (1).

16. A jointed-belt cover according to claim 15, characterised in that the height of the plugs (19) corresponds to the thickness of the plates (1) and in that one end of the plugs (19) has a circular indentation (21) and the other end a corresponding circular rounding (22), the indentations (21) and roundings (22) of adjacent plugs sliding pivotally past one another.

# Fig.1

# Fig.2

# Fig.3

Fig.4

1 14

15

Fig.5

16 18 1

17

Fig.6

20 20 19

21 22

Fig.7

19 1 22 1 19

3 20 5 20 5 3 5 20 5 20 3

2